# EUROPEAN PATENT APPLICATION

(11) **EP 4 790 925 A1**
(43) Date of publication of application: **12.08.2026**
(21) Application number: 26151779.1
(22) Date of filing: 14.01.2026
(51) Int. Cl.: H04B 17/345, H04L 5/00, H04W 24/10

(54) **APPARATUS AND METHOD FOR MEASUREMENT CONFIGURATION BASED ON IN-GAP INTERFERENCE**

(30) Priority: 06.02.2025 GB 202501745
(71) Applicant: Nokia Technologies Oy, 02610 Espoo (FI)
(72) Inventor: RYSGAARD, Bent Henneberg, Aalborg (DK); DALSGAARD, Lars, Oulu (FI); KAZEMI, Parham, Espoo (FI); NIELSEN, Kim, Storvorde (DK)
(74) Representative: Nokia EPO representatives

(57) **Abstract**

Embodiments of the present disclosure relate to a UE apparatus, method, and computer program for measurement configuration based on in-gap interference. The UE apparatus determines, a first configuration for measuring a level of in-gap interference between a first CC and a second CC. The UE apparatus determines, based on the in-gap interference level, a second configuration for measuring at least one or more of a first CC, a second CC, and the in-gap interference. The UE apparatus measures, at least one of the first CC, the in-gap interference, or the second CC using at least one RF resource based on the determined first configuration and the determined second configuration.

## Description

### FIELD

Embodiments of the present disclosure generally relate to the field of wireless communication, and in particular to a device, method, apparatus and a computer program for measurement configuration based on in-gap interference.

### BACKGROUND

A communication network can be seen as a facility that enables communications between two or more communication devices, or provides communication devices access to a data network. A mobile or wireless communication network is one example of a communication network.

Such communication networks operate in accordance with standards, such as those promulgated by third generation partnership project (3GPP) or European telecommunications standards institute (ETSI). Examples of such standards include the so-called 5th generation (5G) standard, 6th generation (6G), or other standards promulgated by 3GPP.

### SUMMARY

In general, example embodiments of the present disclosure provide devices, methods and a computer program for measurement configuration based on in-gap interference.

In a first aspect, there is provided a user equipment (UE) apparatus. The UE apparatus comprises at least one processor and at least one memory storing instructions that, when executed by the at least one processor, cause the UE at least to determine, a first configuration for measuring a level of in-gap interference between a first component carrier (CC) and a second CC; determine, based on the in-gap interference level, a second configuration for measuring at least one or more of a first CC, a second CC, and the in-gap interference; and measure, at least one of the first CC, the in-gap interference, or the second CC using at least one RF resource based on the determined first configuration and the determined second configuration.

In some embodiments, the first configuration for measuring the level of in-gap interference comprises power measurement controlled by the UE apparatus and/or a network apparatus.

In some embodiments, the first CC is for a primary cell (PCell), or the first CC and the second CC is for a secondary cell (SCell).

In some embodiments, the first CC is for a PCell, and the second configuration for measuring comprises at least one of the following: a configuration for measuring at least one of the PCell, the in-gap interference, or the second CC on a shared RF resource based on that the level of the in-gap interference is lower than or equal to a threshold; or a configuration for measuring at least one of the PCell, the in-gap interference, or the second CC on separate RF resources based on that the level of the in-gap interference is higher than or equal to a threshold.

In some embodiments, the first CC is for a PCell, and the second configuration for measuring comprises at least one of the following: a configuration for measuring at least one of the PCell, the in-gap interference, or the second CC on a first RF resource based on that the level of the in-gap interference is lower than or equal to a threshold; or a configuration for at least one of measuring the PCell on a first RF resource, measuring the in-gap interference on a second RF resource, or measuring the second CC on a third RF resource based on that the level of the in-gap interference is higher than or equal to a threshold.

In some embodiments, the first CC is for a SCell and the second configuration for measuring comprises at least one of the following: a configuration for measuring the first CC, the in-gap interference and the second CC on a shared RF resource based on that the level of the in-gap interference is lower than or equal to a threshold; or a configuration for measuring the first CC, the in-gap interference, and the second CC on separate RF resources based on that the level of the in-gap interference is higher than or equal to a threshold.

In some embodiments, the shared RF resource is same as an RF resource for the PCell, or the shared RF resource is different from an RF resource for the PCell.

In some embodiments, the first CC is for a SCell, and the second configuration for measuring comprises at least one of the following: a configuration for measuring at least one of the first CC, the in-gap interference, or the second CC on a first RF resource based on that the level of the in-gap interference is lower than or equal to a threshold; or a configuration for at least one of measuring the first CC on a first RF resource, measuring the in-gap interference on a second RF resource, or measuring the second CC on a third RF resource based on that the level of the in-gap interference is higher than or equal to a threshold.

In some embodiments, the level of the in-gap interference is average power of the in-gap interference.

In some embodiments, the UE apparatus is further caused to: transmit, to a network device, information of a need for a gap for the measurement based on the measurement is not parallel to PCell reception.

In a second aspect, there is provided a method implemented at a UE apparatus. The method comprises determining, a first configuration for measuring a level of in-gap interference between a first CC and a second CC; determining, based on the in-gap interference level, a second configuration for measuring at least one or more of a first CC, a second CC, and the in-gap interference; and measuring, at least one of the first CC, the in-gap interference, or the second CC using at least one RF resource based on the determined first configuration and the determined second configuration.

In a third aspect, there is provided a computer program. The computer program comprises instructions which, when executed by an apparatus, cause the apparatus to perform the method according to the second aspect above.

In a fourth aspect, there is provided a non-transitory computer readable medium. The non-transitory computer readable medium comprises program instructions for causing the user equipment apparatus at least to perform the method according to the second aspect above.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some embodiments will now be described with reference to the accompanying drawings, in which:
Fig. 1 illustrates an example network environment in which some embodiments of the present disclosure can be implemented;
Fig. 2 illustrates a flowchart of an example method according to some embodiments of the present disclosure;
Fig. 3A illustrates an example of configuration for measurement according to some embodiments of the present disclosure;
Fig. 3B illustrates an example of configuration for measurement according to some embodiments of the present disclosure;
Fig. 3C illustrates an example of configuration for measurement according to some embodiments of the present disclosure;
Fig. 3D illustrates an example of configuration for measurement according to some embodiments of the present disclosure;
Fig. 4A illustrates an example of distribution in timing and between RF resources of measurement according to some embodiments of the present disclosure;
Fig. 4B illustrates an example of distribution in timing and between RF resources of measurement according to some embodiments of the present disclosure;
Fig. 5A illustrates an example of configuration for measurement according to some embodiments of the present disclosure;
Fig. 5B illustrates an example of configuration for measurement according to some embodiments of the present disclosure;
Fig. 5C illustrates an example of configuration for measurement according to some embodiments of the present disclosure;
Fig. 6A illustrates an example of distribution in timing and between RF resources of measurement according to some embodiments of the present disclosure;
Fig. 6B illustrates an example of distribution in timing and between RF resources of measurement according to some embodiments of the present disclosure;
Fig. 6C illustrates an example of distribution in timing and between RF resources of measurement according to some embodiments of the present disclosure;
Fig. 6D illustrates an example of distribution in timing and between RF resources of measurement according to some embodiments of the present disclosure;
Fig. 6E illustrates an example of distribution in timing and between RF resources of measurement according to some embodiments of the present disclosure;
Fig. 7 illustrates an example of configuration for measurement according to some embodiments of the present disclosure;
Fig. 8 illustrates a simplified block diagram of an apparatus that is suitable for implementing embodiments of the present disclosure; and
Fig. 9 illustrates a block diagram of an example computer readable medium in accordance with some embodiments of the present disclosure.

Throughout the drawings, the same or similar reference numerals represent the same or similar elements.

### DETAILED DESCRIPTION

Principles of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band internet of things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. The term "communication network" may also refer to proprietary or non-standard radio system. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a remote radio unit (RRU), a radio header (RH), a remote radio head (RRH), a relay, a low power node such as a femto, a pico, and so forth, depending on the applied terminology and technology.

As used herein, the term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

Principles and embodiments of the present disclosure will be described in detail below with reference to the accompanying drawings.

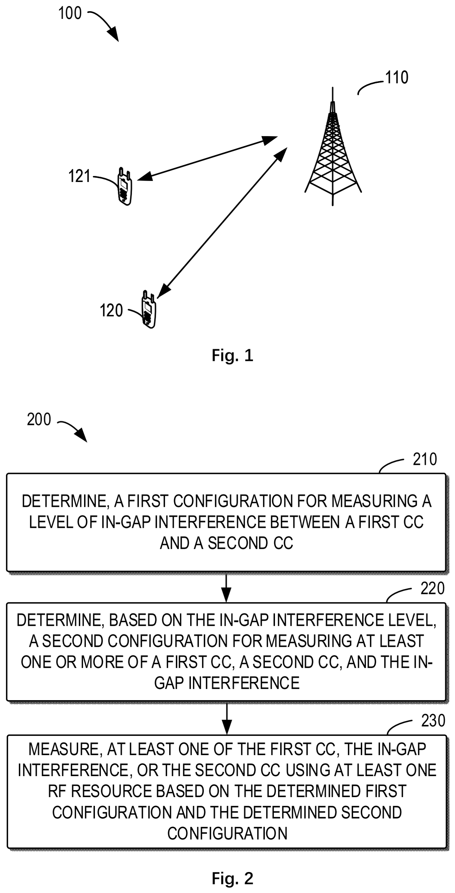

Reference is first made to Fig. 1, which illustrates an example communication system 100 in which embodiments of the present disclosure may be implemented. The system 100 includes a network device 110, and one or more UE, such as UE 120, 121.

It is to be understood that the number of network devices or UE is only for the purpose of illustration without suggesting any limitations. The system 100 may include any suitable number of network devices and UE adapted for implementing embodiments of the present disclosure.

Communications in the communication system 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for electrical and electronics engineers (IEEE) 802.11 and the like, and/or any other protocols currently known or to be developed in the future. Moreover, the communication may utilize any proper wireless communication technology, comprising but not limited to: code division multiple access (CDMA), frequency division multiple access (FDMA), time division multiple access (TDMA), frequency division duplex (FDD), time division duplex (TDD), multiple-input multiple-output (MIMO), orthogonal frequency division multiple (OFDM), discrete Fourier transform spread OFDM (DFT-s-OFDM) and/or any other technologies currently known or to be developed in the future.

Before a UE can activate a second carrier to operate with a first carrier in a fragmented carrier configuration or a set of secondary carriers configured for the fragmented carrier operation, measurements must be performed to establish a level of in-gap interferer if the activation shall not end in a trial and error approach, which is not preferred by a network device. The same is the case if a carrier is de-activated for a period of lower data throughput to maintain the ability to enable the carrier again, when needed. Therefore, maintaining reliable measurements is essential.

Among others, an issue addressed by some embodiments of the present disclosure is how to reduce resource usage for a measurement of carriers and corresponding in-gap interference, and not decrease performance of the UE for measurements in general.

According to embodiments of the present disclosure, there is provided a UE apparatus for measurement configuration based on in-gap interference. In an aspect of the UE apparatus, the UE apparatus determines, a first configuration for measuring a level of in-gap interference between a first CC and a second CC. The UE apparatus determines, based on the in-gap interference level, a second configuration for measuring at least one or more of a first CC, a second CC, and the in-gap interference. The UE apparatus measures, at least one of the first CC, the in-gap interference, or the second CC using at least one RF resource based on the determined first configuration and the determined second configuration. With the solution as proposed herein, the resource used for the measurement is reduced.

Reference is now made to Fig. 2, which illustrates a flowchart of an example method 200 in accordance with some embodiments of the present disclosure. For the purpose of discussion, the method 200 will be described from the perspective of the UE 120 with reference to Fig. 1.

At 210, the UE 120 may determine a first configuration for measuring a level of in-gap interference for a gap positioned between a first CC (also referred to as CC1) and a second CC (also referred to as CC2). The first CC and the second CC may be referred to as a fragmented carrier pair, indicating they are not positioned adjacent to each other's spectrum, but distanced at some frequency offset.

In some embodiments, the level of the in-gap interference is average power of the in-gap interference. In some embodiments, the UE 120 may determine the level of the in-gap interference based on a power measurement of the in-gap interference. In some embodiments, the first configuration for measuring the level of in-gap interference may comprise power measurement controlled by the UE 120 and/or the network device 110.

At 220, the UE 120 may determine, based on the in-gap interference level, a second configuration for measuring at least one or more of a first CC, a second CC, and the in-gap interference. In some embodiments, the UE 120 may determine the second configuration based on a relationship between the level of the in-gap interference and a threshold. In some embodiments, the threshold is determined by UE architecture performance for withstanding an interference within receiver bandwidth. If the level of the in-gap interference is above the threshold, the in-gap interference may cause excessive interference and impact measurement requirements.

At 230, the UE 120 may measure at least one of the first CC, the in-gap interference, or the second CC on at least one RF resource based on the determined first configuration and the determined second configuration.

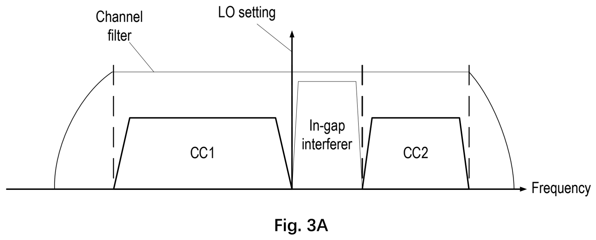

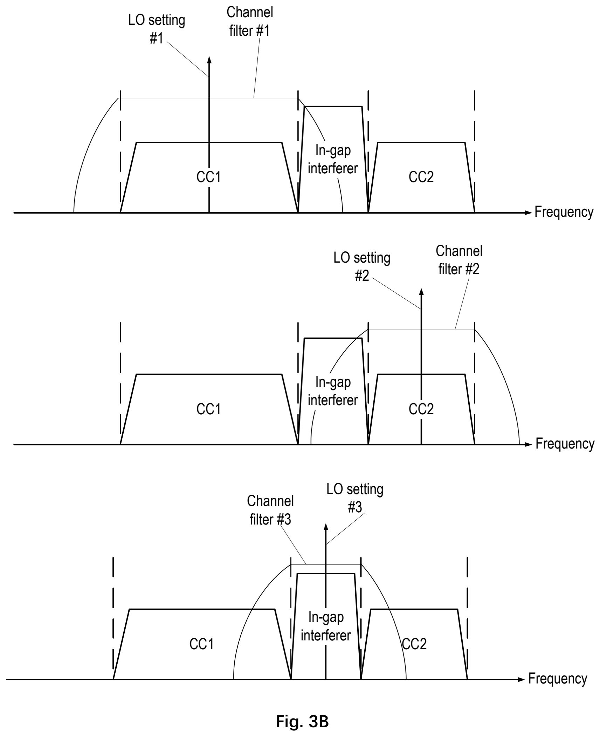

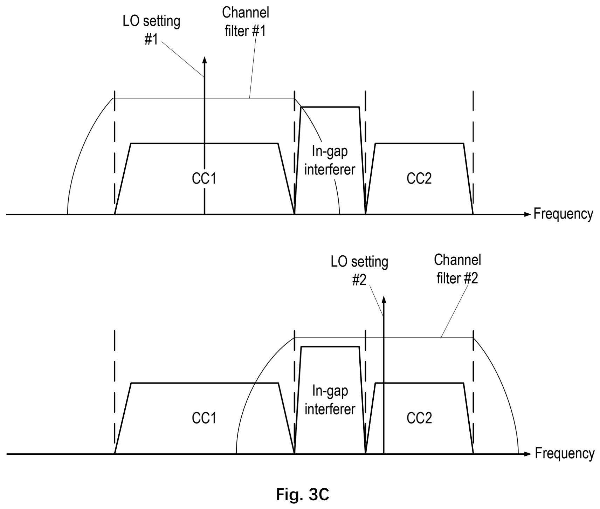

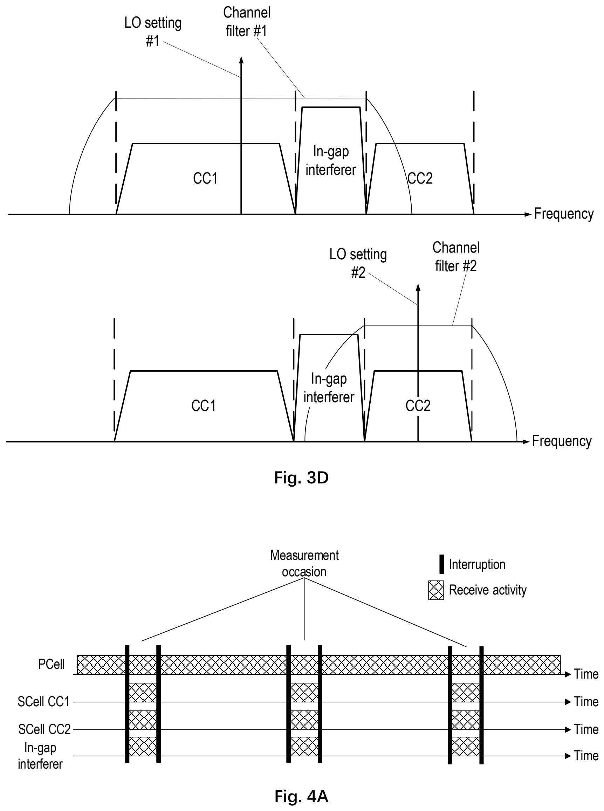

In some embodiments, the first CC and the second CC is for a SCell. It is to be understood that possible configurations for measuring may comprise the following options:
a) measuring the first CC, the in-gap interference and the second CC using a same configuration, for example, a configuration with a local oscillator (LO) setting for frequency placement and a channel filter setting, as shown in Fig. 3A. In other words, measuring the first CC, the in-gap interference and the second CC using a shared RF resource;
b) measuring the first CC, the in-gap interference and the second CC using configurations different from each other, for example, measuring the first CC using a configuration #1 with a LO setting #1 and a channel filter setting #1, measuring the second CC using a configuration #2 with a LO setting #2 and a channel filter setting #2, and measuring the in-gap interference using a configuration #3 with a LO setting #3 and a channel filter setting #3, as shown in Fig. 3B. In other words, measuring the first CC, the in-gap interference and the second CC using separate RF resources;
c) measuring the second CC and the in-gap interference using a same configuration and measuring the first CC using a configuration different from the configuration for the second CC and the in-gap interference, for example, measuring the first CC using a configuration #1 with a LO setting #1 and a channel filter setting #1, and measuring the in-gap interference and the second CC using a configuration #2 with a LO setting #2 and a channel filter setting #2, as shown in Fig. 3C;
d) measuring the first CC and the in-gap interference using a same configuration and measuring the second CC using a configuration different from the configuration for the first CC and the in-gap interference, for example, measuring the first CC and the in-gap interference using a configuration #1 with a LO setting #1 and a channel filter setting #1, and measuring the second CC using a configuration #2 with a LO setting #2 and a channel filter setting #2, as shown in Fig. 3D.

In some embodiments, a configuration may comprise a LO setting and/or a channel filter setting. The frequency of the LO may be set as a central frequency of all elements to be measured (at least one of the first CC, the in-gap interference and the second CC). The channel filter may be set to cover frequency range of all elements to be measured. In some embodiments, each of different configurations may correspond to a RF resource. In some embodiments, each of different configurations may correspond to a single Rx RF chain configuration. For example, for the option b above, the measurement for the first CC may be performed on a first Rx RF chain #1 configuration, the measurement for the in-gap interference may be performed on a second Rx RF chain #2 configuration, and the measurement for the second CC may be performed on a third Rx RF chain #3 configuration. In other words, measuring the first CC, the in-gap interference and the second CC using separate RF resources.

In some embodiments, measurements using the same configuration may use a shared RF resource. By measuring the first CC, the in-gap interference and/or the second CC using shared RF resource, measuring the first CC, the in-gap interference and/or the second CC can be performed in parallel.

In some embodiments, measurements using the same configuration may use different RF resources. It is to be understood that different RF resources may be different in time and/or frequency domain. For example, in a first measurement occasion, there may be a number of first RF resources available for the measurement. The first RF resources are same in time domain while different in frequency domain. In a second measurement occasion, there may be a number of second RF resources available for the measurement. The second RF resources are different from the first RF resources in time domain, and may or may not be different from the first RF resources in frequency domain. In some embodiments, as many measurements on different RF resources may be performed in parallel as possible, which may be considered as optimal configuration, depending on how many RF resources that may be available for the measurements. In some embodiments, the measurements on different RF resources may be performed in parallel if there are enough RF resources in one measurement occasion. In this way, time latency of the measurement may be reduced. Therefore, the SCell activation time is reduced.

It is to be understood that using the shared RF resource may reduce the need for resource usage. However, if the level of the in-gap interference is too high, the in-gap interference may affect the measurement of the first CC or the second CC if using the shared RF resource together with the in-gap interference. Therefore, in the present disclosure, the configuration for measurement may be based on the level of the in-gap interference. If the level of the in-gap interference is lower than or equal to a threshold, the in-gap interference may be measured together with the first CC and/or the second CC. Therefore, the configuration for measurement may choose the option with least RF resource usage, for example, option a. If the level of the in-gap interference is higher than or equal to a threshold, the in-gap interference may be measured separately, for example, option b.

In some embodiments, the configuration for measuring may comprise a configuration for measuring the first CC, the in-gap interference and the second CC on a shared RF resource based on that the level of the in-gap interference is lower than or equal to a threshold. In some embodiments, the configuration for measuring may comprise a configuration for measuring the first CC, the in-gap interference, and the second CC on separate RF resources based on that the level of the in-gap interference is higher than or equal to a threshold.

In some embodiments, the configuration for measuring may comprise a configuration for measuring at least one of the first CC, the in-gap interference, or the second CC on a first RF resource based on that the level of the in-gap interference is lower than or equal to a threshold. In some embodiments, the configuration for measuring may comprise a configuration for at least one of measuring the first CC on a first RF resource, measuring the in-gap interference on a second RF resource, or measuring the second CC on a third RF resource based on that the level of the in-gap interference is higher than or equal to a threshold.

In some embodiments, the RF resource for the measurement (e.g. the shared RF resource) may be the same as an RF resource for the PCell. That is, the measurement may be done in parallel to maintaining the PCell, for example, as shown in Fig. 4A.

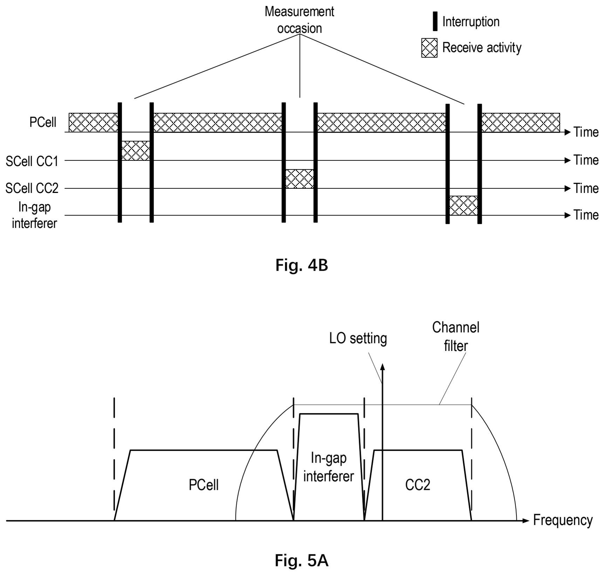

In some embodiments, the RF resource for the measurement is different from an RF resource for the PCell. In some embodiments, at least one gap or interruption for the PCell may be required to perform the measurement, as shown in Fig. 4B. It is to be understood that some or all of the measurement may need a gap if the measurement can not be done in parallel with the PCell.

In some embodiments, the UE 120 may transmit, to the network device 110, information of a need for a gap for the measurement based on the measurement is not parallel to PCell reception.

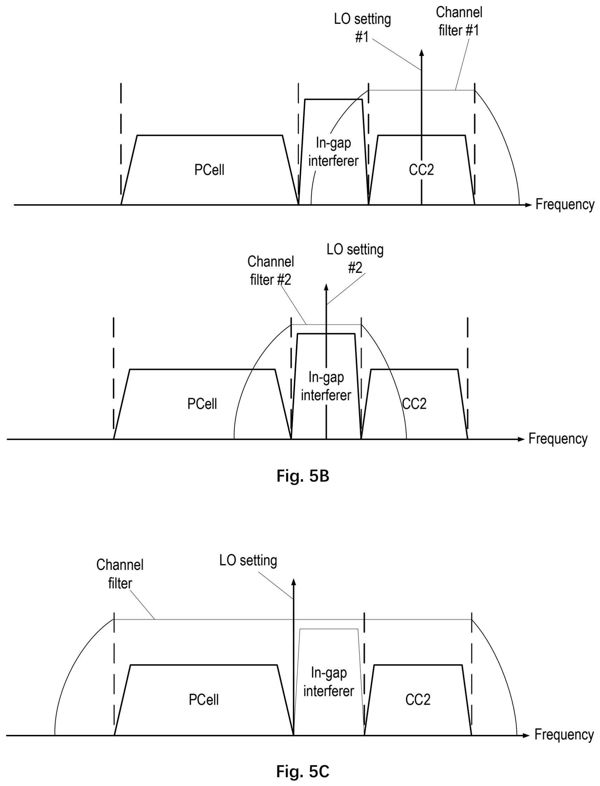

In some embodiments, the first CC is for a PCell, and the second CC is for a SCell. In this case, the first CC (PCell) is already active. It is to be understood that possible configurations for measuring may comprise the following options:
a) measuring the in-gap interference and the second CC using a same configuration, for example, a configuration with a LO setting and a channel filter setting, as shown in Fig. 5A;
b) measuring the in-gap interference and the second CC using configurations different from each other, for example, measuring the second CC using a configuration #1 with a LO setting #1 and a channel filter setting #1, and measuring the in-gap interference using a configuration #2 with a LO setting #2 and a channel filter setting #2, as shown in Fig. 5B;
c) measuring the PCell, the in-gap interference and the second CC using a same configuration, for example, a configuration with a LO setting and a channel filter setting, as shown in Fig. 5C.

In some embodiments, the configuration may comprise local oscillator (LO) setting and channel filter setting. The frequency of the LO may be set as a central frequency of all elements to be measured (at least one of the PCell, the in-gap interference and the second CC). The channel filter may be set to cover frequency range of all elements to be measured. In some embodiments, each of different configurations may correspond to a RF resource.

In some embodiments, measurements using the same configuration may use a shared RF resource. By measuring the PCell, the in-gap interference and/or the second CC using shared RF resource, measuring the PCell, the in-gap interference and/or the second CC can be performed in parallel. In some embodiments, measurements using the same configuration may use different RF resources.

It is to be understood that using shared RF resource may reduce resource usage. However, if the level of the in-gap interference is too high, the in-gap interference may affect the measurement of the PCell or the second CC if using the shared RF resource together with the in-gap interference, especially for the case that the first CC is for a PCell, it may set the first CC at risk if the in-gap interference increases momentarily. Therefore, in the present disclosure, the configuration for measurement may be based on the level of the in-gap interference. If the level of the in-gap interference is lower than or equal to a threshold, the in-gap interference may be measured together with the first CC and/or the second CC. Therefore, the configuration for measurement may choose the option with least RF resource usage, for example, option c according to Fig. 5C. If the level of the in-gap interference is higher than or equal to a threshold, the in-gap interference may be measured separately, for example, option b according to Fig. 5B.

In some embodiments, the UE 120 may setup the fragmented carrier target already at the SCell activation, and perform measurements in the same configuration as for when the activation procedure is finished.

In some embodiments, the configuration for measuring may comprise a configuration for measuring at least one of the PCell, the in-gap interference, or the second CC on a shared RF resource based on that the level of the in-gap interference is lower than or equal to a threshold. In some embodiments, the configuration for measuring may comprise a configuration for measuring at least one of the PCell, the in-gap interference, or the second CC on separate RF resources based on that the level of the in-gap interference is higher than or equal to a threshold.

In some embodiments, the configuration for measuring may comprise a configuration for measuring at least one of the PCell, the in-gap interference, or the second CC on a first RF resource based on that the level of the in-gap interference is lower than or equal to a threshold. In some embodiments, the configuration for measuring may comprise a configuration for at least one of measuring the PCell on a first RF resource, measuring the in-gap interference on a second RF resource, or measuring the second CC on a third RF resource based on that the level of the in-gap interference is higher than or equal to a threshold.

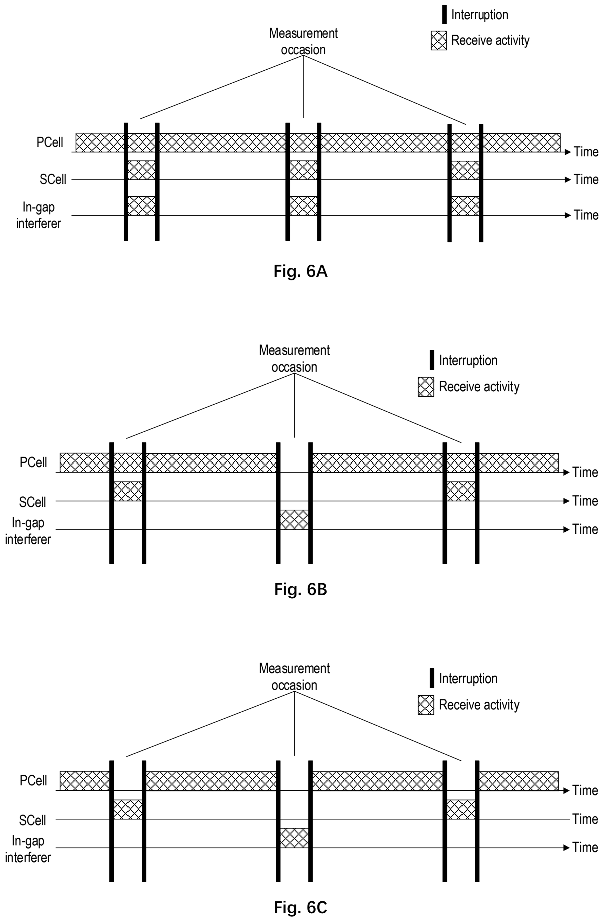

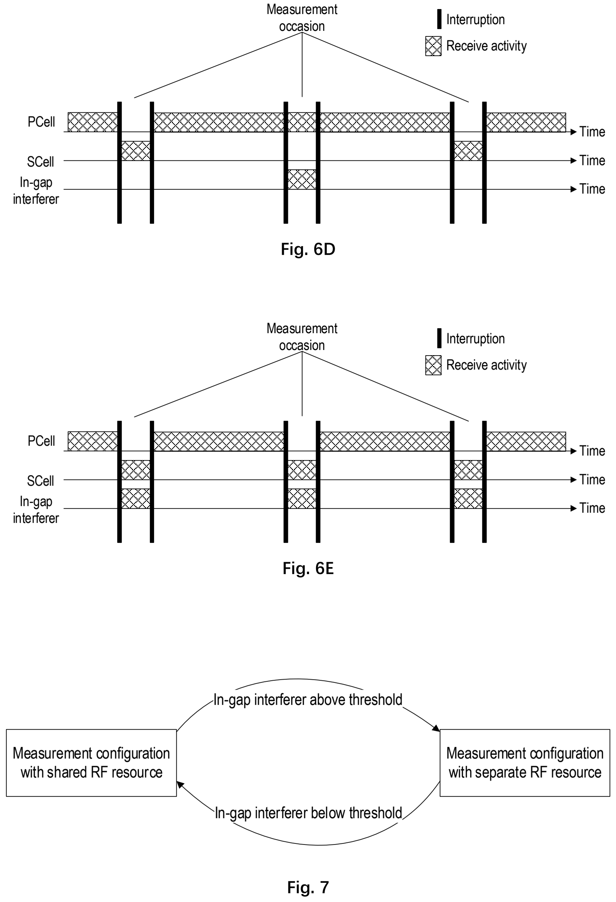

Reference is now made to Fig. 6A to Fig. 6E, which illustrate examples of distribution in timing and between RF resources of measurement based on scenario of Fig. 5A to Fig. 5C. In Fig. 6A, it may be with a shared RF resource for measuring all of the PCell, the second CC and the in-gap interference in parallel. Alternatively, it may be 2 sets of RF resources respectively for measuring the PCell and for measuring the second CC and the in-gap interference in parallel.

In some embodiments, the UE 120 may transmit, to the network device 110, information of a need for a gap or interruption for the measurement based on the measurement is not parallel to PCell reception.

Reference is now made to Fig. 7, which illustrates an example of configuration for measurement according to some embodiments of the present disclosure. The left block is a measurement configuration with a shared RF resource, for example, the measurement configuration may be option c for PCell scenario as shown in Fig. 5C, or option a for SCell scenario as shown in Fig. 3A. The right block is a measurement configuration with separate RF resources, for example, the measurement configuration may be option b for PCell scenario as shown in Fig. 5B, or option b for SCell scenario as shown in Fig. 3B. The UE 120 may switch measurement configuration based on in-gap interference level, for example, switch between the left block and the right block, to ensure the measurements are not invalidated by a too high interference level.

In some embodiments, the UE 120 may receive fragmented carrier configuration from the network device 110.

In some embodiments, the UE 120 may determine the configuration for measurements based on signaling from the network device 110.

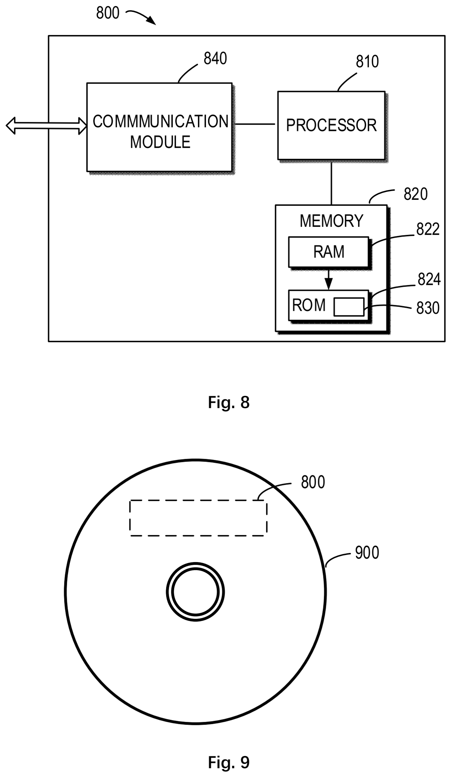

Fig. 8 is a simplified block diagram of a device 800 that is suitable for implementing embodiments of the present disclosure. The device 800 may be provided to implement the communication device, for example the UE 120 as shown in Fig. 1. As shown, the device 800 includes one or more processors 810, one or more memories 820 coupled to the processor 810, and one or more communication modules 840 coupled to the processor 810.

The communication module 840 is for bidirectional communications. The communication module 840 has at least one antenna to facilitate communication. The communication interface may represent any interface that is necessary for communication with other network elements.

The processor 810 may be of any type suitable to the local technical network and may include one or more of the following: general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The memory 820 may include one or more non-volatile memories and one or more volatile memories. Examples of the non-volatile memories include, but are not limited to, a read only memory (ROM) 824, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 822 and other volatile memories that will not last in the power-down duration.

A computer program 830 includes computer executable instructions that are executed by the associated processor 810. The program 830 may be stored in the ROM 824. The processor 810 may perform any suitable actions and processing by loading the program 830 into the RAM 822.

The communication module 840 is for bidirectional communications. The communication module 840 has at least one antenna to facilitate communication. The communication interface may represent any interface that is necessary for communication with other network elements.

The embodiments of the present disclosure may be implemented by means of the program 830 so that the device 800 may perform any process of the disclosure as discussed with reference to Figs. 2 to 7. The embodiments of the present disclosure may also be implemented by hardware or by a combination of software and hardware.

In some embodiments, the program 830 may be tangibly contained in a computer readable medium which may be included in the device 800 (such as in the memory 820) or other storage devices that are accessible by the device 800. The device 800 may load the program 830 from the computer readable medium to the RAM 822 for execution. The computer readable medium may include any types of tangible non-volatile storage, such as ROM, EPROM, a flash memory, a hard disk, CD, DVD, and the like. Fig. 9 shows an example of the computer readable medium 900 in form of CD or DVD. The computer readable medium has the program 830 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method as described above with reference to Figs. 2-7. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A user equipment (UE) apparatus comprising:
at least one processor; and
at least one memory storing instructions that, when executed by the at least one processor, cause the UE apparatus at least to:
determine, a first configuration for measuring a level of in-gap interference between a first component carrier (CC) and a second CC;
determine, based on the in-gap interference level, a second configuration for measuring at least one or more of a first CC, a second CC, and the in-gap interference; and
measure, at least one of the first CC, the in-gap interference, or the second CC using at least one RF resource based on the determined first configuration and the determined second configuration.

2. The UE apparatus of claim 1, wherein the first configuration for measuring the level of in-gap interference comprises power measurement controlled by the UE apparatus and/or a network apparatus.

3. The UE apparatus of claim 1 or 2, wherein the first CC is for a primary cell (PCell), or the first CC and the second CC is for a secondary cell (SCell).

4. The UE apparatus of any of claims 1-3, wherein the first CC is for a PCell, and wherein the second configuration for measuring comprises at least one of the following:
a configuration for measuring at least one of the PCell, the in-gap interference, or the second CC on a shared RF resource based on that the level of the in-gap interference is lower than or equal to a threshold; or
a configuration for measuring at least one of the PCell, the in-gap interference, or the second CC on separate RF resources based on that the level of the in-gap interference is higher than or equal to a threshold.

5. The UE apparatus of any of claims 1-3, wherein the first CC is for a PCell, and wherein the second configuration for measuring comprises at least one of the following:
a configuration for measuring at least one of the PCell, the in-gap interference, or the second CC on a first RF resource based on that the level of the in-gap interference is lower than or equal to a threshold; or
a configuration for at least one of measuring the PCell on a first RF resource, measuring the in-gap interference on a second RF resource, or measuring the second CC on a third RF resource based on that the level of the in-gap interference is higher than or equal to a threshold.

6. The UE apparatus of any of claims 1-3, wherein the first CC is for a SCell and wherein the second configuration for measuring comprises at least one of the following:
a configuration for measuring the first CC, the in-gap interference and the second CC on a shared RF resource based on that the level of the in-gap interference is lower than or equal to a threshold; or
a configuration for measuring the first CC, the in-gap interference, and the second CC on separate RF resources based on that the level of the in-gap interference is higher than or equal to a threshold.

7. The UE apparatus of claim 6, wherein the shared RF resource is same as an RF resource for the PCell, or the shared RF resource is different from an RF resource for the PCell.

8. The UE apparatus of any of claims 1-3, wherein the first CC is for a SCell, and wherein the second configuration for measuring comprises at least one of the following:
a configuration for measuring at least one of the first CC, the in-gap interference, or the second CC on a first RF resource based on that the level of the in-gap interference is lower than or equal to a threshold; or
a configuration for at least one of measuring the first CC on a first RF resource, measuring the in-gap interference on a second RF resource, or measuring the second CC on a third RF resource based on that the level of the in-gap interference is higher than or equal to a threshold.

9. The UE apparatus of any of claims 1-8, wherein the level of the in-gap interference is average power of the in-gap interference.

10. The UE apparatus of any of claims 1-9, wherein the UE apparatus is further caused to:
transmit, to a network device, information of a need for a gap for the measurement based on the measurement is not parallel to PCell reception.

11. A method comprising:
determining, a first configuration for measuring a level of in-gap interference between a first component carrier (CC) and a second CC;
determining, based on the in-gap interference level, a second configuration for measuring at least one or more of a first CC, a second CC, and the in-gap interference; and
measuring, at least one of the first CC, the in-gap interference, or the second CC using at least one RF resource based on the determined first configuration and the determined second configuration.

12. The method of claim 11, wherein the first configuration for measuring the level of in-gap interference comprises power measurement controlled by the UE apparatus and/or a network apparatus.

13. The method of claim 11 or 12, wherein the first CC is for a primary cell (PCell), or the first CC and the second CC is for a secondary cell (SCell).

14. The method of any of claims 11-13, wherein the first CC is for a PCell, and wherein the second configuration for measuring comprises at least one of the following:
a configuration for measuring at least one of the PCell, the in-gap interference, or the second CC on a shared RF resource based on that the level of the in-gap interference is lower than or equal to a threshold; or
a configuration for measuring at least one of the PCell, the in-gap interference, or the second CC on separate RF resources based on that the level of the in-gap interference is higher than or equal to a threshold.

15. The method of any of claims 11-13, wherein the first CC is for a SCell and wherein the second configuration for measuring comprises at least one of the following:
a configuration for measuring the first CC, the in-gap interference and the second CC on a shared RF resource based on that the level of the in-gap interference is lower than or equal to a threshold; or
a configuration for measuring the first CC, the in-gap interference, and the second CC on separate RF resources based on that the level of the in-gap interference is higher than or equal to a threshold.
